# EUROPEAN PATENT APPLICATION

(11) **EP 4 660 485 A2**
(43) Date of publication of application: **10.12.2025**
(21) Application number: 25201911.2
(22) Date of filing: 17.10.2022
(51) Int. Cl.: F16J 15/16

(54) **SHAFT ARRANGEMENT**

(30) Priority: 18.10.2021 EP 21203210
(62) Divisional of application: 22802155.6
(71) Applicant: Koenigsegg Automotive AB, 262 74 Ängelholm (SE)
(72) Inventor: VON KOENIGSEGG, Christian, 266 54 VEJBYSTRAND (SE); LANGELAND LARSEN, Emil, 262 33 ÄNGELHOLM (SE); LEND, Ruben, 262 33 ÄNGELHOLM (SE)
(74) Representative: Brann AB

(57) **Abstract**

1. A rotary union (30) for connecting to a shaft (18) of a gearbox (10) is proposed. The rotary union (30) comprises: a female part (32), a male part (34) rotatable relative to the female part (32) on an axis of rotation (198), and a first primary conduit (36). The first primary conduit (36) comprises: a female conduit portion (48) formed by the female part (32), and a male conduit portion (50) formed by the male part (34). The rotary union (30) forms a first coupling (52) between the female conduit portion (48) and the male conduit portion (50). The female part (32) further forms an annular seat (82) facing the male part (34). The rotary union (30) further comprises: a primary seal (78) positioned in the annular seat (82), wherein the primary seal (78) is a dynamic seal configured to radially seal to the male part (34) and to shift in position away from the first coupling (52) along the axis of rotation (198) and axially seal to the female part (32) at an increase in pressure of the first primary fluid in the first coupling (52).

## Description

### TECHNICAL FIELD

The proposed technology generally relates to the field of gearboxes for land vehicles, and particularly to rotary unions for shafts of gearboxes in high-performance cars.

### BACKGROUND

There are gearboxes with hydraulically operated wet clutches that control the gear shifting. The wet clutches are mounted on and rotate with the shafts, and each wet clutch is connected to a gear wheel and can couple or uncouple the gear wheel from the shaft. The gear wheel meshes with another gearwheel fixed to another shaft. The combination of activated wet clutches determines the total gear ratio of the gearbox. Several wet clutches can be mounted on the same shaft. An example of a gearbox with hydraulically operated wet clutches is described in WO2020/161334.

The fluid pressures required for a fast activation of the wet is typically high. Additionally, if the gearboxes are to be used in high-performance road vehicles, the shafts will rotate at high rates. The hydraulic fluid controlling the wet clutches is typically provided from outside the gearbox via the shaft. Rotary unions can be used to supply the hydraulic fluid to the wet clutches via the shafts. However, at the required pressures and rotational rates required for high-performance road vehicles, sealing is a problem and hydraulic fluid can leak from the rotary unions.

The different mechanical components and the wet clutches require lubrication and cooling. The simultaneous supply of a hydraulic fluid and a lubricant or coolant to shaft-mounted via the shaft is difficult. Lubricants or coolants are typically supplied at significantly lower pressure and in higher volumes than the hydraulic fluid. This means that the supply of the fluids must be separated if they are supplied via the shaft.

The size of the gearbox is also important in high-performance application.

### SUMMARY

It is a general object of the proposed technology to provide hydraulic control, cooling, and lubrication of shaft-mounted components in a high-performance gearbox. It is a particular object to supply high-pressure fluids for controlling wet clutches mounted on the shafts of a gearbox, and to simultaneously supply a lubricant or coolant to shaft-mounted components.

Another object is to prevent or mitigate leakage from a rotary union outside of a gearbox case at high fluid pressures and high rotational rates and. Another object is to provide a compact rotary union. Another object is to supply a high-pressure fluid to wet clutches mounted on a shaft having a pinion outside the gearbox case. Another object is to provide individual hydraulic control of several wet clutches mounted on the same shaft.

In a first aspect of the proposed technology, a rotary union, or rotary joint, is proposed, for example for conveying a first primary fluid to a shaft of a gearbox. The rotary union comprises: a female part, housing part, or stationary part, and a male part, shaft part, or rotary part, seated in the female part and rotatable relative to the female part, and a first primary conduit configured, or arranged, to convey a first primary fluid, for example to the shaft.

The female part may form, or comprise, a seat, or male seat, in which the male part is seated. It is understood that the male part may be rotatable relative to the female part on an axis of rotation. The shaft may share this axis of rotation. The first primary fluid may be a hydraulic fluid. The female part may be configured to be fixed, or attached, to a gearbox case. The female part may be configured to form part of the gearbox case. The male part of the rotary union may be configured to connect to a shaft. The shaft may extend within the gearbox case. The shaft may have a first end and a second end, and may form, or comprises, an interior space, and a shaft opening to the interior space at the first end. The male part of the rotary union may be configured to be fixed, or attached, to the shaft at the first end of the shaft.

As mentioned above, the rotary union comprises a first primary conduit. The first primary conduit may comprise: a female conduit portion formed by the female part of the rotary union, and a male conduit portion formed by the male part of the rotary union. Additionally, the rotary union may form a first coupling between the female conduit portion and the male conduit portion. The female part may form an annular seat, or annular seal housing, facing the male part. The rotary union may further comprise: a primary seal, which may be fitted, or positioned, in the annular seat, wherein the primary seal is a dynamic seal configured to radially seal to the male part and to shift in position away from the first coupling along the axis of rotation and axially seal to the female part at an increase in pressure of the first primary fluid in the first coupling.

It is understood that the first coupling is configured to allow the first primary fluid to be conveyed by the first primary conduit at any orientation of the male part relative to the female part of the rotary union. The first primary seal described below may have any of the features of the primary seal described here. Similarly, the first annular seat described below may have any of the features of the annular seat described here.

It understood that the male part may be axially fixed relative to the female part. This means that the male part is prevented from shifting relative to the female part along, or parallel to, the rotational axis. For example, this may be achieved by axial bearings operationally connecting the male part and the female part.

It is understood that the annular seat may be configured to allow the primary seal to shift in position. The shifting in position of the primary seal and the axial seal to the female part has the effect of an improved sealing at high rotational rates. It is understood that the primary seal can shift in position along the axis of rotation. For example, the annular seat may have a cylindrical geometry with an inner diameter that is larger than the outer diameter of the primary seal.

It is specified that the primary seal may be configured to shift in position away from the first coupling along the axis of rotation and axially seal to the female part at an increase in pressure of the first primary fluid in the first coupling. It is understood that the primary seal may be configured to shift in position towards the first coupling along the axis of rotation at a subsequent decrease in pressure of the first primary fluid in the first coupling. This means that when the pressure is not increased, the primary seal may allow for the non-pressurized first primary fluid to leak past the primary seal. This allows for a flow of the first primary fluid past the primary seal and prevents a backflow in the female conduit portion. Metal particles may form through wear. These can travel with the backflow and accumulate downstream, for example in in control valves, which may cause malfunctions or wear. In conclusion, the dynamic positioning of the primary seal allows for a controlled leakage when the primary fluid is not pressurized.

It is further understood that the primary seal may be configured to shift in position relative to the male part. The dynamic seal is configured to radially seal to the male part. In operation, the male part may be subjected to axial vibrations or shifts in position along the axial of rotation. The radial sealing to the male part reduces the transfer of axial forces from the male part to the radial sealing. Thus, the effects of axial vibrations or shifts in position of the male part on the dynamic seal are reduced. This would not be the case if the dynamic seal instead was configured to axially seal to the male part. The axial vibrations or shifts in position of the male part could cause the male part to engage the dynamic seal also when the first primary fluid is not pressurized. This would reduce the controlled leakage of the primary fluid. The dynamic seal being configured to radially seal to the male part and the primary seal being configured to shift in position away from the first coupling synergistically contribute to an improved controlled leakage when the first primary fluid is not pressurized.

The rotary union may further comprise: a second primary conduit configured to convey a second primary fluid, for example to the shaft. The second primary conduit comprises: a female conduit portion formed by the female part of the rotary union, and a male conduit portion formed by the male part of the rotary union, wherein the rotary union forms a second coupling between the female conduit portion and the male conduit portion of the second primary conduit. The annular seat and the primary seal are located between the second coupling and the first coupling, and the primary seal is configured to shift in position away from the second coupling along the axis of rotation and axially seal to the female part at an increase in pressure of the second primary fluid in the second coupling.

The specified location of the primary seal between the second coupling and the first coupling and the primary seal axially sealing to the female part at an increase in pressure of the first primary fluid and the second primary fluid allows for symmetric sealing properties with respect to the first and second couplings. Additionally, the dynamic positioning of the primary seal being allows for a controlled leakage between the two couplings when none of the primary fluids are pressurized.

The relative positions of the primary seal, the first coupling, and the second coupling prevent the first primary fluid from entering the second coupling, and vice versa. The second primary fluid may be a hydraulic fluid.

It is understood that the primary seal may be an annular, or ring-shaped, seal. The primary seal may be coaxial with the annular seat. The primary seal may be centered on, or coaxial with, the male part or the axis of rotation of the male part relative to the female part. The primary seal may comprise a seal ring, wherein the seal ring forms an inner surface and a first side surface, the inner surface cooperates with the male part, and the first side surface cooperates with the female part at the increase in pressure of the first primary fluid in the first coupling.

The male part may form a contact surface cooperating with the inner surface formed by the seal ring. The inner surface of the seal ring may be flush with, or conform to, the contact surface of the male part. The female part, or the annular seat, may form a first wall surface configured to cooperate with the first side surface of the seal ring at the increase in pressure of the first primary fluid in the first coupling. The first side surface of the seal ring may be flush with, or conform to, the first wall surface at the increase in pressure of the first primary fluid.

The inner surface of the seal ring may have a cylindrical geometry concentric with axis of rotation. This means that the inner surface extends parallel to the axis of rotation. It is understood that the primary seal radially seals to the male part by the inner surface cooperating with the male part, or the contact surface of the male part.

The first side surface may have a planar geometry transverse to the axis of rotation. It is understood that the primary seal seals to the female part by the first side surface cooperating with the female part, or the first wall surface.

The seal ring may further form a second side surface, wherein the second side surface and the first side surface face opposite directions and the second side surface cooperates with the female part at the increase in pressure of the second primary fluid in the second coupling.

The female part, or the annular seat, may form a second wall surface configured to cooperate with the second side surface of the seal ring at the increase in pressure of the second primary fluid in the second coupling. The second side surface of the seal ring may be flush with, or conform to, the second wall surface at the increase in pressure of the second primary fluid in the second coupling. The second wall surface may face the first wall surface.

The second side surface may have a planar geometry transverse to the axis of rotation. It is understood that the primary seal seals to the female part by the second side surface cooperating with the female part, or the second wall surface.

It is specified that the annular seat may be configured to allow the primary seal to shift in position. For example, the width of the annular seat may be greater than the width of the primary seal. Here, the widths are understood to be along, or parallel to, the axis of rotation. For example, the first side surface and the second side surface may be separated by a distance that is greater than the axial extension of the primary seal relative to the axis of rotation.

It is specified above that the primary seal may be configured to shift in position away from the first coupling along the axis of rotation and axially seal to the female part. This means that the primary seal may have a first position and a second position relative to the male part, or relative to the axis of rotation. It is understood that the primary seal radially seals to the male part in both positions. The primary seal is located closer to the first coupling in the first position than in the second position. It is understood that the primary seal is configured to transitions from the first position to the second position at an increase in pressure of the first primary fluid in the first coupling.

In the first position, the primary seal may allow for the first primary fluid to pass, or leak, between the primary seal and the female part. In the first position, a first axial gap may be formed between the primary seal and the female part. It is understood that the first axial gap allows for a passage of a fluid between the primary seal and the female part, such as the first primary fluid at a low constant pressure. Here, an axial gap is understood as a gap parallel to, or along, the axis of rotation.

In the second position, the primary seal may axially seal to the female part. In the second position, the primary seal may prevent the first primary fluid from passing between the primary seal and the female part. This means that there is no first axial gap between the primary seal and the female part in the second position. Worded differently, the first axial gap may decrease and disappear at a transition from the first position to the second position.

It is specified above that the rotary union may form a second coupling and that the annular seat and the primary seal are located between the second coupling and the first coupling. It is further specified that the primary seal is configured to shift in position away from the second coupling along the axis of rotation and axially seal to the female part at an increase in pressure of a second primary fluid in the second coupling. This means that the primary seal may additionally have a third position relative to the male part, or relative to the axis of rotation. It is understood that the primary seal radially seals to the male part in the third position. The primary seal is located closer to the second coupling in the first position than in the third position. The primary seal is located closer to the first coupling in the third position than in the second position, The primary seal is located closer to the second coupling in the second position than in the third position. Worded differently, the first position may be located between the second position and the third position. It is understood that the primary seal is configured to transitions from the first position to the third position at an increase in pressure of the second primary fluid in the second coupling. It is also understood that the primary seal is configured to transitions from the second position to the third position via the first position at an increase in pressure of the second primary fluid in the second coupling.

In the first position, the primary seal may allow for the second primary fluid to pass, or leak, between the primary seal and the female part. In the first position, a second axial gap may be formed between the primary seal and the female part. It is understood that the second axial gap allows for a passage of a fluid between the primary seal and the female part, such as the second primary fluid at a low constant pressure. In the third position, the primary seal may axially seal to the female part. In the third position, the primary seal may prevent the second primary fluid from passing between the primary seal and the female part. This means that there is no second axial gap between the primary seal and the female part in the third position. Worded differently, the second gap may decrease and disappear at a transition from the first position to the third position.

The seal ring may be made of annealed iron or annealed steel. Additionally, or alternatively, the seal ring may be made of cast iron or cast steel. The male part, or the contact surface of the male part, may be coated with Diamond Like Carbon (DLC) at the seal ring. It has been found that this coating is favorable in providing a sealing between the sealing ring and the male part. It is contemplated that the surface structure of the DLC coating contributes to form a film of the first or second primary fluids between the seal ring and the male part preventing leakage.

The seal ring may be biased against the male part, or the contact surface of the male part. The seal ring may have one or more cuts arranged to allow a radially inward deformation of the seal ring. The primary seal may comprise a clamping spring biasing the seal ring against the male part, or the contact surface of the male part.

The primary seal may be rotationally, or tangentially, fixed to the female part. The primary seal may comprise a recess and the female part may comprise a protrusion extending into the recess and arranged to prevent a rotation of the primary seal on the axis of rotation relative to the female part. The recess and the protrusion may be configured to allow the primary seal to shift in position along the axis of rotation. For example, the protrusion may extend towards the male part transversely to the axis of rotation and the recess may be elongated and aligned with the axis of rotation. The protrusion may be located in the annular seat and the recess may be located at a radially outward facing edge of the primary seal.

In a second aspect of the proposed technology, a shaft arrangement, or assembly, for conveying a first primary fluid, for example to hydraulic components inside a gearbox of a vehicle, is provided. The shaft arrangement comprises: a rotary union according to the first aspect of the proposed technology and a shaft fixed to the male part of the rotary union, wherein the first primary conduit further comprises a shaft conduit portion extending within the shaft from the male part of the rotary union. It is understood that the shaft conduit portion is connected to the male conduit portion.

Worded differently, in the second aspect of the proposed technology the shaft arrangement instead comprises: a shaft having a first end and a second end, wherein the shaft forms, or comprises, an interior space, a shaft opening to the interior space at the first end and a first conduit aperture, or through hole, open to the interior space. The shaft arrangement further comprises: a first rotary union comprising a female part, housing part, or stationary part, forming, or comprising, a seat, and a male part, shaft part, or rotary part, seated in the female part and rotatable relative to the female part, wherein the male part is fixed, or attached, to the shaft. The shaft arrangement further comprises, a first primary conduit configured, or arranged, to convey a first primary fluid to, or through, the first conduit aperture via the first rotary union and the interior space of the shaft. The first rotary union may comprise any of the features of the rotary union described in relation to the first aspect of the proposed technology. In extension, this means that the first primary conduit may comprise any of the features of the first primary conduit of the first aspect of the proposed technology.

The female part may be configured to be fixed, or attached, to a gearbox case. The female part may be configured to form part of the gearbox case. It is understood that the shaft is intended to transfer torque within the gearbox case, and possibly also to receive torque from outside the gearbox case or to deliver torque to the outside of the gearbox case.

The shaft arrangement may further comprise a hydraulically operated first wet clutch mounted on the shaft and operationally connected to the first primary conduit to receive the first primary fluid. The first wet clutch may be mounted at, or cover, the first conduit aperture.

In a third aspect of the proposed technology, a gearbox for a land vehicle is provided comprising: a gearbox case and a shaft arrangement according to the second aspect of the proposed technology, wherein the female part is fixed, or attached, to the gearbox case. The female part may form part of the gearbox case. The gearbox case may form, or comprise, an enclosed space. It is understood that the shaft is intended to transfer torque within the gearbox, or within the enclosed space of the gearbox case, and possibly also to receive torque from outside the gearbox case or to deliver torque from the gearbox case.

It is understood that the first conduit aperture is located inside the gearbox, or inside the enclosed space formed by the gearbox case. The complete shaft may be inside the gearbox, or inside the enclosed space formed by the gearbox case. The male part of the rotary union may extend into, or within, the interior space of the shaft and connect to the shaft from inside the interior space of the shaft.

The interior space of the shaft may be a single partition, or volume, which means that it is not composed of several disjoint spaces. The interior space may extend from the first end to the second end of the shaft.

That a first element is fixed to a second element should be understood to encompass the first element being fixed directly to the second element or the first element being indirectly fixed to the second element by an intermediate element. This means that the first element cannot shift in position or orientation relative to the second element.

That the male part is seated in the female part is understood to encompass the complete male part being positioned within the seat, or a portion of the male part being positioned in the seat.

It is understood that the shaft opening and the first conduit aperture allows access to the interior space from outside the shaft, for example access by the male part of the rotary union entering the shaft through the shaft opening.

The first primary conduit may extend within the interior space from the male part of the rotary union to the first conduit aperture. This means that the interior space as such does not form part of the first primary conduit. The first primary conduit may be sealed from the interior space. That a first element is sealed from a second element means that a fluid is prevented from passing from the first element to the second element. This means that the first primary fluid is prevented to flow directly from the first primary conduit to the interior space outside the first primary conduit.

The first primary conduit may be sealed to the shaft at the first conduit aperture. That a first element is sealed to a second element that a fluid is prevented from passing in between, or along a space separating, the elements, for example through a gap formed between the elements. This means that no fluid within the interior space that is outside the first primary conduit can flow through the first conduit aperture.

The first rotary union may be a hydraulic rotary union. Additionally, or alternatively, the first rotary union may be a high-pressure rotary union. This is understood to encompass rotary unions that can convey a fluid at a fluid pressure at least up to 50 bar, 100 bar, 150 bar, 200 bar, or 250 bar Thus, the second rotary union and the secondary conduit allow for a high-pressure fluid so be supplied to within the gearbox. For example, the high-pressure fluid may be hydraulic fluid.

The first primary conduit may be a hydraulic conduit. Additionally, or alternatively, the first primary conduit may be a high-pressure conduit. This is understood to encompass conduits that can convey a fluid at a fluid pressure at least up to 50 bar, 100 bar, 150 bar, 200 bar, or 250 bar.

The first rotary union may be configured to operate at rotational rates of the male part at least up to 7000 rpm, 9000 rpm, 11000 rpm, or 13000rpm.

The first primary conduit may be configured, or arranged, to convey the first primary fluid from outside the female part of the rotary union, from outside the gearbox case, or from a primary fluid source located outside the gearbox case. Alternatively, the first primary conduit may be configured, or arranged, to convey the first primary fluid from a primary fluid source located inside the gearbox case.

The shaft may be rigid. The interior space may have rotational symmetry relative to the shaft. The interior space may extend from the first end to the second end of the shaft and may having a circular cross-section along its complete length between the first end and the second end. The cylindrical space may be coaxial with the shaft. The shaft opening may be concentric with the shaft, or with the cylindrical space. The shaft opening may be a circular opening.

The first conduit aperture may be arranged off-axis, laterally, or radially, relative to the shaft. Additionally, or alternatively, the first conduit aperture may be longitudinally spaced apart from the first end of the shaft, or the shaft opening, or longitudinally arranged, relative to the first end of the shaft, or the shaft opening.

The male part of the rotary union may have a transverse, or radial, extension that is smaller than the transverse, or radial, extension of the shaft, or the interior space, at the first end. This allows for the complete male part to be located, or positioned, within the shaft, or the interior space of the shaft.

The shaft arrangement may further comprise: a second rotary union, or rotary joint, comprising a stationary part and a rotary part fixed, or attached, to the shaft, and a secondary conduit configured, or arranged, to convey a secondary fluid to the interior space of the shaft via the second rotary union, or via the stationary part of the second rotary union.

The stationary part of the second rotary union may be configured to be fixed, or attached, to the gearbox case. The stationary part may form part of the gearbox case. If the shaft arrangement forms part of the gearbox, the stationary part of the second rotary union is fixed, or attached, to the gearbox case. The rotary part of the second rotary union may be fixed, or attached, to the shaft at the second end.

The shaft may form, or comprise, a shaft outlet configured to release a fluid in the interior space, such as the secondary fluid. If the shaft arrangement forms part of the gearbox, the secondary fluid may be released to the enclosed space formed by the gearbox case, for example at a rotary bearing mounted on the shaft and supporting a gear wheel.

The second rotary union may be a low-pressure rotary union. This is understood to encompass rotary unions that can convey a fluid at a fluid pressure up to, or at least up to, 5 bar, 10 bar, or 20 bar. Thus, the second rotary union and the secondary conduit allow for a low-pressure fluid so be supplied within the gearbox. For example, the low-pressure fluid may be a lubricant and/or coolant.

The secondary conduit may be a low-pressure conduit. This is understood to encompass conduits that can convey a fluid at a fluid pressure up to, or at least up to, 5 bar, 10 bar, or 20 bar.

The first primary fluid and the secondary fluid may be the same type of fluid but supplied at different fluid pressures. The first primary fluid may be supplied at a higher fluid pressure than the secondary fluid.

The secondary conduit may be configured, or arranged, to convey the secondary fluid from outside the stationary part of the second rotary union, from outside the gearbox case, or from a secondary fluid source located outside the gearbox case. Alternatively, the secondary conduit may be configured, or arranged, to convey the secondary fluid from a secondary fluid source located inside the gearbox case.

The male part of the rotary union may be sealed to the shaft. This means that the secondary fluid is prevented from leaving the interior space of the shaft via the shaft opening at the first end of the shaft.

As specified above, the first primary conduit may comprise: a female conduit portion formed by the female part of the rotary union, and a male conduit portion formed by the male part of the rotary union, wherein the rotary union forms, or comprises, a first coupling, or annular coupling, between the female conduit portion and the male conduit portion.

It is understood that the first coupling is configured to allow the first primary fluid to be conveyed by the first primary conduit at any orientation of the male part relative to the female part of the rotary union. It is further understood that the first coupling is located within the seat.

The first primary conduit may further comprise a shaft conduit portion extending within the interior space of the shaft from the male part of the rotary union through the first conduit aperture. The shaft conduit portion may be off-axis relative to the shaft. This allows for additional primary conduits to pass through the shaft.

The shaft conduit portion being off axis may result in an imbalance of the shaft. During operation of the shaft assembly, the interior space of the shaft is filled with the secondary fluid via the second rotary union, which will mitigate the imbalance.

The female conduit portion of the first primary conduit may have an inlet accessible from outside the female part of the rotary union and an outlet at the first coupling. The male conduit portion of the first primary conduit may have an inlet at the first coupling and an outlet at the shaft, or accessible from the shaft.

In the shaft arrangement, the outlet of the male conduit portion may be accessible from the interior space of the shaft. The shaft conduit portion may have an inlet sealed to the outlet of the male conduit portion and an outlet located at the first conduit aperture, or outside the shaft.

It is understood that the inlet of the male conduit is in fluid communication with the outlet of the female conduit portion. It is further understood that it can receive the first primary fluid at any relative orientation between the female part and the male part of the rotary union. If the shaft arrangement forms part of the gearbox, the inlet of the female conduit portion may be accessible from outside the gearbox case.

The seat may comprise a seating space formed by the female part of the rotary union.

The seating space may be cylindrical and have a circular cross-section. The male part of the rotary union may comprise a cylindrical portion seated in and coaxial with the seating space. The first coupling may comprise a first annular groove formed by the female part and open to the seating space, or facing the male part. The outlet of the female conduit portion may be located within the first annular groove. The inlet of the male conduit portion may be located at the first annular groove. It is understood that the inlet of the male conduit portion is open to the first annular groove.

The seat may have a first seat opening facing in the direction of the shaft, and the rotary union may further comprise: a first primary seal between the first coupling and the first seat opening, and a first drain passage, or conduit, configured to drain, or convey, any first primary fluid that has leaked through the first primary seal, wherein the first drain passage is further configured to drain, or convey, any first primary fluid via the first seat opening. The first primary seal may have any of the of the abovementioned features of the primary seal. For example, it may comprise a seal ring.

Alternatively, if the shaft arrangement forms part of the gearbox, the first drain passage, or conduit, may be configured to drain, or convey, any first primary fluid that has leaked through the first primary seal, wherein the first drain passage is further configured to drain, or convey, any first primary fluid to the enclosed space of the gearbox case.

It is understood that the first primary seal is located within the seat and that it engages the female and male parts of the rotary union. It is further understood that the first primary fluid leaking through the first primary seal is leaking from the first coupling. That the first seat opening is facing in the direction of the shaft means that if the shaft arrangement forms part of the gearbox and the male part of the rotary union and the shaft are removed, the seat is open to the enclosed space formed by the gearbox case. The first seat opening may be located inside the shaft, or the interior space of the shaft. This means that if a fluid leaks between the female part and the male part through the first seat opening, the fluid will enter the interior space formed by the shaft.

It is understood that the primary seal is a dynamic seal. A dynamic seal is understood to providing a sealing between two moving elements. The first primary seal may be a dynamic radial seal. A dynamic radial seal is understood to provide a sealing between two elements that rotate relative one another, where the sealing prevents a flow along the axis of rotation. This means that the first primary seal prevents the first primary fluid to escape the first primary conduit at the first coupling in a direction along the shaft. The dynamic radial seal allows for a compact construction of the rotary union.

The first drain passage may be formed by the female part of the rotary union. The first drain passage may extend radially, or transversely, relative to the shaft. Alternatively, or additionally, the first drain passage may be formed between the female part and the male part.

The female part may form a first annular seat locking the first primary seal in position, or a first annular seat groove in which the first primary seal is seated or fitted. The first annular seat may have any of the features of the above-described annular seat.

The first primary seal may be configured to provide a sealing at fluid pressures of the first primary fluid at least up to 50 bar, 100 bar, 150 bar, 200 bar, or 250 bar.

The interior space of the shaft may form part of the first drain passage. Additionally, the male part and/or the shaft may form a portion of the first drain passage. The shaft may form, or comprise, a shaft outlet configured to release the first primary fluid in the interior space. If the shaft arrangement forms part of the gearbox, first primary fluid may be released to the enclosed space formed by the gearbox case, for example at a rotary bearing mounted on the shaft and supporting a gear wheel. This shaft outlet may be the same as the shaft outlet described above that is configured to release the secondary fluid. This means that the first primary fluid and the secondary fluid are mixed in the interior space of the shaft. This setup requires that the fluid primary pressure of the first primary fluid is higher than the fluid pressure of the secondary fluid.

As specified above, the rotary union may comprise: a second primary conduit configured, or arranged, to convey a second primary fluid to the shaft.

The second primary conduit may be sealed from the interior space. This means that the second primary fluid is prevented to flow directly from the second primary conduit to the interior space outside the second primary conduit.

The second primary conduit may be a hydraulic conduit. Additionally, or alternatively, the second primary conduit may be a high-pressure conduit. Similar to the first primary conduit, the second primary conduit may be configured, or arranged, to convey the second primary fluid from outside the female part, from outside the gearbox case, or from a primary fluid source located outside the gearbox case. Alternatively, the second primary conduit may be configured, or arranged, to convey the second primary fluid from a primary fluid source located inside the gearbox case.

The first primary fluid and the second primary fluid may be the same type of fluid. Additionally, or alternatively, they may be supplied at the same fluid pressure, or at fluid pressures of the same order of magnitude.

The shaft may have a second conduit aperture, or through hole, open to the interior space, and the second primary conduit is further configured, or arranged, to convey the second primary fluid to the second conduit aperture via the first rotary union and the interior space of the shaft.

It is understood that the second conduit aperture allows access to the interior space from outside the shaft. The second primary conduit may extend within the interior space from the male part of the rotary union to the second conduit aperture. This means that the interior space as such does not form part of the second primary conduit.

The second primary conduit may be sealed to the shaft at the second conduit aperture. This means that no fluid within the interior space that is outside the second primary conduit can flow through the second conduit aperture.

It is understood that the second conduit aperture is separate from the first conduit aperture. Similar to the first conduit aperture, the second conduit aperture may be arranged off-axis, laterally, or radially, relative to the shaft. The second conduit aperture may be longitudinally spaced apart from the first end of the shaft, or the shaft opening, or longitudinally arranged, relative to the first end of the shaft, or the shaft opening. Additionally, or alternatively, the second conduit aperture may be longitudinally spaced apart from the first conduit aperture, or longitudinally arranged, relative to the first conduit aperture. This allows for hydraulic control of several components mounted on the shaft.

The shaft arrangement may further comprise a hydraulically operated second wet clutch mounted on the shaft and operationally connected to the second primary conduit to receive the second primary fluid. The second wet clutch may be mounted at, or cover, the second conduit aperture.

As specified above, the second primary conduit may comprise: a female conduit portion formed by the female part of the rotary union, and a male conduit portion formed by the male part of the rotary union, and wherein the rotary union forms, or comprises, a second coupling, or annular coupling, between the female conduit portion and the male conduit portion.

It is understood that the second coupling is configured to allow the second primary fluid to be conveyed by the second primary conduit at any orientation of the male part relative to the female part of the rotary union. It is further understood that the second coupling is located within the seat.

The second primary conduit may further comprise a shaft conduit portion extending within the interior space of the shaft from the male part of the rotary union through the second conduit aperture. The shaft conduit portion of the second primary conduit may be off-axis relative to the shaft.

The female conduit portion of the second primary conduit may have an inlet accessible from outside the female part of the rotary union and an outlet at the second coupling, and the male conduit portion of the second primary conduit may have an inlet at the second coupling and an outlet at the shaft, or accessible from the shaft.

The outlet of the male conduit portion of the second primary conduit may be accessible from the interior space of the shaft. The shaft conduit portion of the second primary conduit may have an inlet sealed to the outlet of the male conduit portion and an outlet located at the first conduit aperture, or outside the shaft.

Similar to the first primary conduit, it is understood that the inlet of the male conduit portion is in fluid communication with the outlet of the female conduit portion. It is further understood that it can receive the second primary fluid at any relative orientation between the female part and the male part of the rotary union.

The inlet of the female conduit portion of the second primary conduit may be accessible from outside the female part of the rotary union, or from outside the gearbox case.

Similar to the first coupling, the second coupling may comprise a second annular groove formed by the female part and open to the seating space. The outlet of the female conduit portion of the second primary conduit may be located within, or open to, the second annular groove. The inlet of the male conduit portion of the second primary conduit may be located at the second annular groove. It is understood that the inlet of the male conduit portion is open to the second annular groove.

The rotary union may further comprise: a second primary seal between the first coupling and the second coupling, a third primary seal between the first coupling and the second coupling, and a second drain passage, or conduit, configured to drain, or convey, any primary fluid, or any first primary fluid or second primary fluid, that has leaked through the second primary seal or the third primary seal, wherein the second drain passage is further configured to drain the primary fluid to outside the female part of the rotary joint. This prevents a leakage from the first primary conduit to the second primary conduit, and vice versa. In extension, this prevents an activation of a component coupled to the second primary conduit to be activated when a component coupled to the first primary conduit is activated. It further prevents a back-flow in the primary conduit that is not pressurized.

Alternatively, the rotary union further comprises a second primary seal between the first coupling and the second coupling.

If the shaft arrangement forms part of the gearbox, the second drain passage may be configured to drain, or convey, any primary fluid, or any first primary fluid or second primary fluid, that has leaked through the second primary seal or the third primary seal, wherein the second drain passage is further configured to drain the primary fluid to the enclosed space of the gearbox case.

The second primary seal and the third primary seal may be spaced apart in a direction along the shaft. The third primary seal may be positioned between the second primary seal and the second coupling.

It is understood that the second and third primary seals are located within the seat and that they engage the female and male parts of the rotary union. It is further understood that the first primary fluid leaking through the second primary seal is leaking from the first coupling. Similarly, it is understood that the first primary fluid leaking through the third primary seal is leaking from the second coupling.

As for the abovementioned fist primary seal, the second and third primary seals may be dynamic seals. The second and third primary seals may be dynamic radial seals. The second and third primary seals may have any of the of the abovementioned features of the primary seal. For example, each may be configured to radially seal to the male part and to shift in position away from the first or second coupling along the axis of rotation and axially seal to the female part at an increase in pressure of the first or second primary fluid in the first or second coupling.

The second drain passage may be formed by the female part of the rotary union. The second drain passage may extend radially, or transversely, relative to the shaft.

The female part may form a second annular seat locking the second primary seal in position and a third annular seat locking the third primary seal in position, or a second annular seat groove in which the second primary seal is seated or fitted and a third annular seat groove in which the third primary seal is seated or fitted. The second annular seat and the third annular seat may have any of the of the abovementioned features of the annular seat. The second primary seal and the second annular seat may cooperate as described above for the primary seal and the annular seat. Similarly, the third primary seal and the third annular seat may cooperate as described above for the primary seal and the annular seat.

The second and third primary seals may be configured to provide a sealing at fluid pressures of the first and second fluids at least up to 50 bar, 100 bar, 150 bar, 200 bar, or 250 bar.

The rotary union may further comprise: a secondary seal between the female part of the rotary union and the shaft, wherein the secondary seal is located outside the seat formed by the female part of the rotary union.

Alternatively, the rotary union may comprise a secondary seal configured to seal between the female part of the rotary union and the shaft, wherein the secondary seal is located outside the seat formed by the female part of the rotary union.

The seat may have the abovementioned first seat opening, or a first seat opening, facing in the direction of the shaft. This means that if a fluid leaks between the female part and the male part through the first seat opening, the fluid will enter the interior space formed by the shaft.

It is understood that the secondary seal engages, or is configured to engage, the female part of the rotary union and the shaft. The female part may extend through the shaft opening and into the interior space formed by the shaft. The secondary seal may be located within the interior space formed by the shaft.

The shaft may form, or comprise, an inside surface facing the interior space formed by the shaft, and the female part of the rotary union may form an outside surface facing the inside surface. The secondary seal may be located, or arranged, between the inside surface formed by the shaft and the outside surface formed by the female part of the rotary union. Additionally, the male part may connect to the inside surface of the shaft. It is understood that the secondary seal may be an annular, or ring-shaped, seal. The secondary seal may be centered on, or coaxial with, the male part or the axis of rotation.

The shaft may form a fourth annular seat locking the secondary seal in position, or a fourth annular seat groove in which the secondary seal is seated or fitted. This allows for a more compact rotary union.

It is understood that the secondary seal prevents, or is configured to prevent, a fluid inside the shaft, or the interior space of the shaft, from leaking between the female part of the rotary union and the shaft.

The abovementioned primary seals may be configured to operate at, or provide a sealing, at, or up to, a first fluid pressure. The secondary seal may be configured to operate at, or provide a sealing, at, or up to, a second fluid pressure that is lower than the first fluid pressure.

It is further understood that the secondary seal is a dynamic seal. The secondary seal may be a dynamic radial seal. This allows for a compact construction of the rotary union.

The secondary seal may be configured to operate, or provide a sealing, at a fluid pressure up to, or at least up to, 5 bar, 10 bar, or 20 bar. Additionally, or alternatively, the secondary seal may be configured to operate, or provide a sealing, at rotational rates of the shaft at least up to 7000 rpm, 9000 rpm, 11000 rpm, or 13000 rpm.

The shaft may comprise, or form, a pinion, gear wheel, or mechanical interface, at the first end of the shaft. If the shaft arrangement forms part of the gearbox, the pinion may be located outside the gearbox case, or accessible from outside the gearbox case. Here, a mechanical interface is understood to be a mechanical element that can interact with other mechanical elements to transfer torque.

It is understood that the pinion and the shaft forms a rigid structure, and that the pinion and the shaft are intended, or configured, to transfer a torque supplied to the shaft within the gearbox to outside gearbox case, or vice versa. It is further understood that the pinion is coaxial relative to the shaft, or relative to the rest of the shaft if the shaft forms the pinion. The pinion may have a distal end facing away from the shaft, and the distal end may be located at the shaft opening. Here, the term distal is to be construed relative to the shaft.

The female part of the rotary union may in part be located inside the pinion. It may extend through the shaft opening and into the pinion. The female part of the rotary union may at least in part be located inside the pinion. The secondary seal may be located within the interior space formed by the shaft.

For example, the pinion may connect to a crown wheel to form a bevel gear. The pinion may form part of a bevel gear of a differential.

The seat of the female part may have the abovementioned first seat opening, or a first seat opening, facing in the direction of the shaft. The seat may have a forward end and a rear end, and the first seat opening is located at the forward end and the seat is closed at the rear end or has a bottom at the rear end. The male part of the rotary union may be accessible via the first seat opening.

This means that the seat forms a blind hole. The rotary union may form a gap at the rear end of the seat between the female part and the male part, or between the bottom of the seat and the male part, and the gap may form part of the second coupling. The gap may have rotational symmetry relative to the shaft. The gap may be concentric with the shaft. The outlet of the female conduit portion may be located within, or open to, the gap. Similarly, the inlet of the male conduit portion may be located at, or open to, the gap.

Alternatively, the seat may have the abovementioned first seat opening, or a first seat opening facing, in the direction of the shaft, a second seat opening facing in the opposite direction of the first seat opening.

The seat may have a forward end and a rear end, wherein the first seat opening is located at the forward end and the second seat opening is located at the second end. This means that the seat forms a through hole. The male part of the rotary union may be accessible via the first seat opening. The male part of the rotary union may be configured to connect to a shaft via the second seat opening.

The male part of the rotary union may also be accessible via the second seat opening, The male part of the rotary union may be configured to connect to an additional shaft via the second seat opening. If the rotary union forms part of a shaft arrangement, the latter may comprise an additional shaft connected, and the male part is connected to the additional shaft via the second seat opening. The male part may be configured to transfer torque received by the shaft to the additional shaft. For example, the additional shaft may form part of a rotary pump providing pressure to the first and second primary fluids. If the shaft arrangement forms part of the gearbox, the second seat opening may be located inside the gearbox case, or inside the enclosed space formed by the gearbox case.

The gearbox case may be a fluid-tight container. This means that it can hold the primary and the secondary fluids that are released in the enclosed space of the gearbox case.

The gearbox may comprise a sump configured, or arranged, to collect fluid released within the enclosed space. For example, the fluid may be a mix of the first primary fluid, the second primary fluid, and the secondary fluid. The sump may be formed by the gearbox case.

The gearbox may further comprise a first pump coupled to the sump and a valve arrangement coupled to the first pump and the first rotary union, the first primary conduit, or the inlet of the female conduit portion of the first primary conduit. The first pump and the valve arrangement may be configured to supply fluid collected by the sump as the first primary fluid to the first primary conduit. The valve arrangement may be configured to regulate the flow of the first primary fluid, for example by turning the flow on and off. As described above, the shaft arrangement may comprise a hydraulically operated first wet clutch mounted on the shaft and coupled to the first primary conduit. This way, the operation of the first wet clutch can be controlled by the pump and the valve arrangement.

The valve arrangement may further be coupled to the second primary conduit, or the inlet of female conduit portion of the second primary conduit, wherein the first pump and the valve arrangement are configured to supply fluid collected by the sump as the second primary fluid to the second primary conduit. The valve arrangement may be configured to regulate the flow of the second primary fluid. As described above, the shaft arrangement may comprise a hydraulically operated second wet clutch mounted on the shaft and coupled to the second primary conduit. The operation of the second wet clutch can then be controlled by the pump and the valve arrangement.

The sump, the first pump, and the valve arrangement may jointly form, or form part of, the abovementioned primary fluid source.

The gearbox may further comprise a second pump coupled to the sump and the second rotary union, or the secondary conduit. The second pump may be configured to supply fluid collected by the sump as the secondary fluid to the secondary conduit.

The sump and the second pump may jointly form, or form part of, the abovementioned secondary fluid source.

The first pump may be a high-pressure pump. For example, it may be configured to supply, or provide, a pressure at least up to 50 bar, 100 bar, 150 bar, 200 bar, or 250 bar. The second pump may be a low-pressure pump. For example, it may be configured to supply, or provide, a pressure up to, or at least up to, 5 bar, 10 bar, or 20 bar.

The gearbox may further comprise a filter between the first pump and the sump for filtering fluid collected by the sump. The filter may also be between the second pump and the sump. Additionally, or alternatively, it may comprise a reservoir between the first pump and the sump, or between the first pump and the filter, for storing fluid collected by the sump. The reservoir may also be between the second pump and the sump, or between the second pump and the filter.

### BRIEF DESCRIPTION OF THE DRAWINGS

A more complete understanding of the abovementioned and other features and advantages of the proposed technology will be apparent from the following detailed description of preferred embodiments of the proposed technology in conjunction with the appended drawings, wherein:
Figure 1 schematically illustrates an embodiment of a shaft arrangement,
Figure 2 schematically illustrates the rotary union of the shaft arrangement in Figure 1,
embodiment of a shaft arrangement,
Figure 3 schematically illustrates another embodiment of a rotary union,
Figure 4 schematically illustrates another embodiment of a rotary union,
Figure 5 schematically illustrates another embodiment of a rotary union,
Figure 6 schematically illustrates an embodiment of gearbox with different types of shaft arrangements,
Figure 7A-C show details of the primary seals in the different embodiments, and
Figure 8 schematically illustrates a seal ring of a primary seal.

### DETAILED DESCRIPTION OF THE DRAWINGS

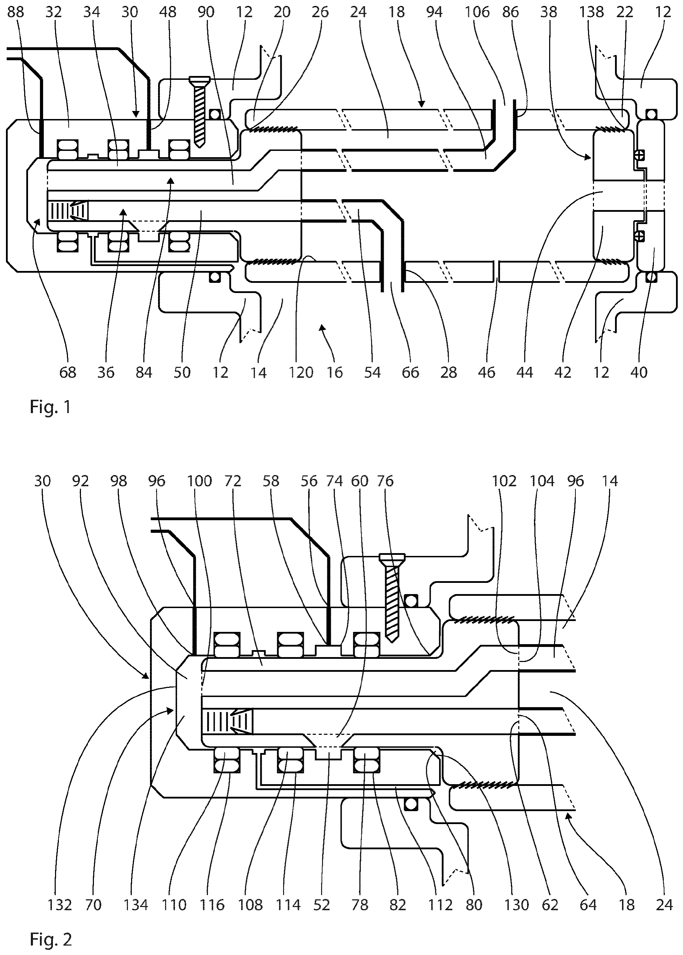

Figure 1 schematically illustrates an embodiment of a shaft arrangement 16 composed of a shaft 18 and a first rotary union 30. Details of the first rotary union 30 are indicated in Figure 2.

The shaft 18 is hollow and has a first end 20 and a second end 22. It forms an interior space 24 that is rotationally symmetric and coaxial relative to the shaft 18. The interior space 24 extends from the first end 20 to the second end 22 and has a circular cross-section along its complete length. The shaft 18 further forms a circular shaft opening 26 to the interior space 24 at the first end 20 that is concentric with the shaft 18. The interior space 24 is through-going and the shaft 18 also has an additional opening 138 at its second end 22.

The shaft 18 further has a first conduit aperture 28 in the form of a circular through hole from outside the shaft 18 to the interior space 24.

The first rotary union 30 has a female part 32 that is fixed to and stationary relative to a gearbox case 12. The female part 32 is extends from the outside of the gearbox case 12. The first rotary union 30 further has a male part 34 that can rotate relative to and within the female part 32. The gearbox case 12 forms an enclosed space 14 and the male 34 is fixed to the shaft 18 inside the enclosed space 14 and seals the shaft opening 26.

The female part 32 forms a seating space 70 that is cylindrical and has a circular cross-section. The male part 34 forms a cylindrical portion 72 seated in and coaxial with the seating space 70. This way, the female part 32 forms a seat 68 in which the is male part 34 is seated. A portion of the male part 34 extends from its cylindrical portion seated in the female part 32.

The seat 68 has a forward end 130 facing the shaft 18 and a rear end 132 facing away from the shaft 18. The seating space 70 is accessible to the male part 34 via a first seat opening 76 at the forward end 130. This means that the seat opening 76 faces in the direction of the shaft 18. The seating space 70 is closed at the rear end 132.

The female part 32 of the rotary union 30 forms a female conduit portion 48 and the male part 34 of the rotary union 30 forms a male conduit portion 50. A shaft conduit portion 54 in the form of a tube extends within the interior space 24 from the male part 24 through the first conduit aperture 28, as illustrated in Figure 1. The conduit portions 48, 50, and 54 are hydraulically connected and jointly form a hydraulic first primary conduit 36 that can supply a pressurized hydraulic fluid to a hydraulically operated component mounted on the shaft 18.

As can be seen in Figures 1 and 2, the first conduit aperture 28 is located off-axis on the side of the shaft 18 and spaced apart from the first end 20 and the second end 22 of the shaft 18. In Figure 1, broken lines indicate longitudinally separate sections of the shaft 18. The shaft conduit portion 54 is located off-axis and the male conduit portion 50 is located off-axis relative to the shaft 18, and hence the first primary conduit 36 is located off-axis.

The male part 34 of the first rotary union 30 has a transverse extension that is smaller than the transverse extensions, of the interior space of the shaft 18. The male part 34 extends into the shaft 18 and engages the inside surface 120 of the shaft 18.

The female part 32 forms a first annular groove 74 in the seat 68 that is open to the seating space 70. The female conduit portion 48 has an inlet 56 that can be accessed from outside the female part 32 and an outlet 58 located within and open to first annular groove 74. The male conduit portion 50 has an inlet 60 located at and open to the first annular groove. This way, a fluid communication is provided between the female conduit portion 48 and the male conduit portion 50 at any relative orientation of the male part 34 relative to the female part 32 and the annular groove 74 constitutes a hydraulic first coupling 52 between the female conduit portion 48 and the male conduit portion 50.

The male conduit portion 50 of the first primary conduit 36 has an outlet 62 at the shaft 18. The outlet 62 is accessible from within the interior space 24 formed by the shaft 18. The shaft conduit portion 54 has an inlet 64 that is sealed to the outlet 62 of the male conduit portion 50 and an outlet 66 located outside the shaft 18 at the first conduit aperture 28. This way, the first primary conduit 36 composed of the conduit portions 48, 50, and 54 is sealed from the interior space 24 of the shaft 18. The shaft conduit portion 54 is sealed to the shaft 18 at the first conduit aperture 28 so that no fluid in the interior space 24 that is outside the first primary conduit 36 can escape via the first conduit aperture 28.

The shaft arrangement 16 also has a second rotary union 38 with stationary part 40 fixed to the gearbox case 12 and a rotary part 42 fixed to the shaft 18 at the second end 22. The second rotary union 38 forms a secondary conduit 44 connecting from outside the gearbox case 12 to the interior space 24 of the shaft 18.

The shaft 18 has a circular through hole from outside the shaft 18 to the interior space 24 of the shaft 18 forming a shaft outlet 46 by which a fluid in the interior space 24 can be released in the enclosed space 14 formed by the gearbox case 12.

During operation, a first primary fluid is supplied via the first primary conduit 36 and a secondary fluid is supplied via the secondary conduit 44. The first primary fluid and the secondary fluid is the same fluid, for example a synthetic transmission oil that can function both as a hydraulic fluid for hydraulically operating components on the shaft 18 and as a coolant and lubricant for mechanical components within the gearbox case 12.

The first primary fluid is supplied at a fluid pressure of 200 bar and the secondary fluid is supplied at a fluid pressure of 5bar. Both rotary unions can operate at rotational rates up to 13000 rpm.

The female part 32 of the first rotary union 30 has a first annular seat 80 in the form of an annular groove positioned between the first coupling 52 and the first seat opening 76. A dynamic radial seal is positioned in and held in place by the first annular seat 82 and constitutes a first primary seal 78 preventing the first primary fluid in the first coupling from escaping via the first seat opening 76.

A first drain passage 80 is formed between the female part 32 and the male part 34 of the first rotary union 30 and extends from the first primary seal 78 to the first seat opening 76. The first seat opening 76 is located outside the shaft 18, and any first primary fluid that leaks through the first primary seal 78 is drained directly into the enclosed space 14 of the gearbox case 12.

In addition to the first conduit aperture 28, the shaft 18 further has a second conduit aperture 86 in the form of a circular through hole from outside the shaft 18 to the interior space 24. The second conduit aperture 86 is located off-axis on the side of the shaft 18 and is spaced apart from the first conduit aperture 28 and the first end 20 and the second end 22 of the shaft 18.

The female part 32 of the rotary union 30 forms an additional female conduit portion 88 and the male part 34 of the rotary union 30 forms an additional male conduit portion 90. An additional shaft conduit portion 94 in the form of a tube extends within the interior space 24 from the male part 24 through the second conduit aperture 86, as illustrated in Figure 1. The additional conduit portions 88, 90, and 94 jointly form a hydraulic second primary conduit 86 that can supply a pressurized hydraulic fluid to a hydraulically operated component mounted on the shaft 18 independently from the first primary conduit 36.

The additional shaft conduit portion 94 the additional male conduit portion 90 are located off-axis relative to the shaft 18, and hence the second primary conduit 86 is located off-axis.

The seat 68 has a rear end 132 at which it is closed, which means that the seating space 70 and the first seat opening 76 are forming a blind hole. A gap 134 having a circular cross section concentric with the shaft 18 is formed between the rear end 132 and the male part 34.

The female conduit portion 88 has an inlet 96 that can be accessed from outside the female part 32 and an outlet 98 open to the gap 134. The male conduit portion 90 has an inlet 100 open to the gap 134. This way, a fluid communication is provided between the female conduit portion 88 and the male conduit portion 90 at any relative orientation of the male part 34 relative to the female part 32 and the gap 134 constitutes a second coupling 92 between the female conduit portion 88 and the male conduit portion 90.

The male conduit portion 90 of the second primary conduit 86 has an outlet 102 at the shaft 18. The outlet 102 is accessible from within the interior space 24 formed by the shaft 18. The shaft conduit portion 94 has an inlet 104 that is sealed to the outlet 102 of the male conduit portion 90 and an outlet 106 located outside the shaft 18 at the second conduit aperture 86. This way, the second primary conduit 86 composed of the conduit portions 88, 90, and 94 is sealed from the interior space 24 of the shaft 18. The shaft conduit portion 94 is sealed to the shaft 18 at the second conduit aperture 86 preventing the secondary fluid within the interior space 24 of the shaft 18 from escaping via the second conduit aperture 86.

During operation, a second primary fluid is supplied via the second primary conduit 86. The second primary fluid is the same type of fluid as the first primary fluid and the secondary fluid is supplied at a fluid pressure of 5 bar.

The female part 32 of the first rotary union 30 has a second annular seat 114 and a third annular seat 116 in the form of annular grooves positioned between the first coupling 52 and the second coupling 92. A dynamic radial seal is positioned in and held in place by the second annular seat 114 and constitutes a second primary seal 108. Similarly, a dynamic radial seal is positioned in and held in place by the third annular seat 116 and constitutes a third primary seal 110. The dynamic radial seals of the primary seals 78, 108, and 110 are of the same type. The dynamic radial seals engage the female part 32 and the male part 34 of the first rotary union 30. The second primary seal 108 prevents the first primary fluid in the first coupling 52 from passing in the direction of the second coupling 92, and the third primary seal 110 prevents the second primary fluid in the second coupling 92 from passing in the direction of the first coupling 52.

The second primary seal 108 and the third primary seal 110 are spaced apart in a direction along the shaft 18. The female part 32 forms a second drain passage 112 in the form of a conduit with closed sides that extends from an annular groove between the second primary seal 108 and the third primary seal 110 to the enclosed space 14 of the gearbox case 12. Any fluid that leaks from the second primary seal 108 and the third primary seal 110 released via the second drain passage 112.

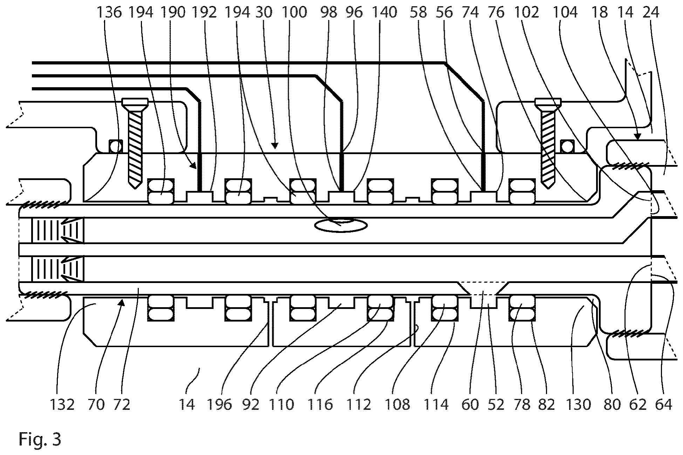

Figure 3 schematically illustrates another embodiment of a rotary union 30. This embodiment shares several features with the embodiment described in relation to Figures 1 and 2. Shared features have been given the same number indexing. The differences between the embodiments are discussed here.

In addition to the first conduit aperture 28 and the second conduit aperture 86, the shaft 18 further has a third conduit aperture (not shown) in the form of a circular through hole from outside the shaft 18 to the interior space 24.

The seating space 70 and the male part 34 of the rotary union are accessible via a second seat opening 136 at the rear end 132 of the seat 68. The second seat opening 136 faces in the opposite direction relative to the first seat opening 76. This means that the seat 68 is not closed at the rear end 132, but forms a through hole. The second seat opening is located inside the enclosed space 14 formed by the gearbox case 12.

The first primary conduit 36, the first coupling 52, and the first, second, and third primary seals 78, 108, and 110 have the above features described in relation to Figures 1 and 2. The first drain passage 80 differs in that it extends radially relative to the shaft 18.

The second coupling 92 differs in that, instead of forming a gap, the female 32 forms a second annular groove 140 that is open to the seating space 70 and the outlet 98 of the female conduit portion 88 of the second primary conduit 84 is open to the second annular groove 140, and the inlet 100 of the male conduit portion 90 of the second primary conduit 84 is open to the second annular groove 140, thus providing a fluid communication between the outlet 98 and the inlet 100. This means that the second coupling is similar to the first coupling.

The first rotary union 30 also has a third primary conduit 190 and a third coupling 192 delimited by primary seals 194 arranged as the first primary conduit 36 and the first coupling 52 but mirrored relative to the first coupling 52. A single primary seal 194 is positioned between the third coupling 192 and second seat opening 136, and two primary seals 194 and a drain passage 196 are arranged between the third coupling 192 and the second coupling 92 in the same way as between the first coupling 52 and the second coupling 92.

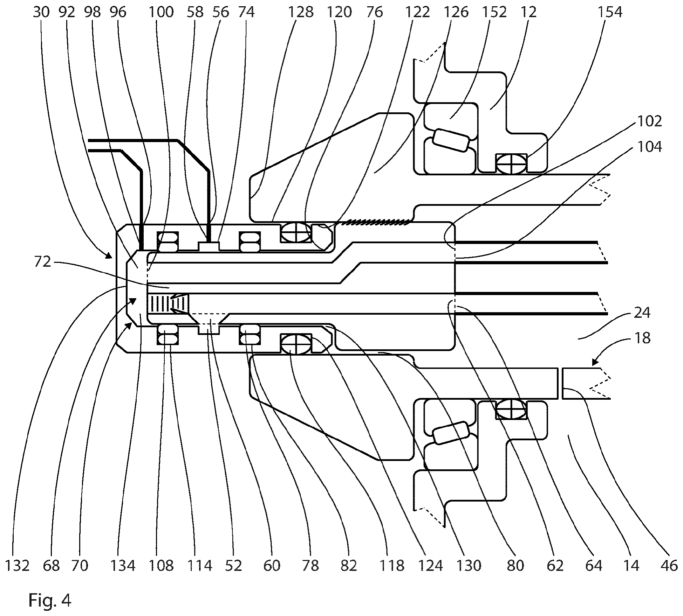

Figure 4 schematically illustrates another embodiment of a rotary union. This embodiment shares several features with the embodiment described in relation to Figures 1 and 2. Shared features have been given the same number indexing. The differences between the embodiments are discussed here.

The shaft 18 extends through the gearbox case 12 and the first end 20 of the shaft 18 is located outside the enclosed space 14 of the gearbox case 12. The shaft 18 forms a pinion 126 that is coaxial relative to the shaft 18 and has a distal end 128, or narrow end, facing away from the shaft 18. The distal end 128 of the pinion is located at the first end 20 of the shaft and the pinion is located outside the gearbox case 12. This means that the pinion 126 is accessible from outside the gearbox case 12.

The female part 32 of the rotary union extends through the shaft opening 26 and a portion of the female part 32 is located in the interior space of 24 of the shaft 18. This means that this portion of the female part 32 is also inside the pinion 12.

The shaft 18 has an inside surface 120 facing the interior space 24 formed by the shaft 18, and the female part 32 of the rotary union 30 has an outside surface 122 facing the inside surface 120. The male part 34 of the rotary union 30 connect to the inside surface 120 of the shaft 18 but is not sealed to the shaft 18.

The shaft 18 form a fourth annular seat 124 in which a dynamic radial seal is fitted that engages the shaft 18 and the female part 32 and constitutes a secondary seal 118 between the female part 32 of the rotary union and the shaft 18 that is located outside the seat 68 and within the interior space 24 formed by the shaft 18. The secondary seal 118 prevents a fluid in the interior space 24 from leaking past the female part 32 and exiting the shaft 18 via the shaft opening 26. The secondary seal 118 provides a sealing at a fluid pressure in the range 0.5-5 bar and at rotational rates in the range 0-13.000 rpm.

The first drain passage 80 formed between the female part 32 and the male part 34 of the first rotary union 30 extends from the first primary seal 78 to the first seat opening 76. The first seat opening 76 is located inside the shaft 18, and any first primary fluid that leaks through the first primary seal 78 is drained between the male part 34 and the shaft 18 into the interior space 24 of the shaft 18. The first primary fluid is mixed with the secondary fluid in the interior space 24, and the mixed fluids are then drained to the enclosed space 14 of the gearbox case 12 via the shaft outlet 46. This way the male part 34, the shaft 18, and the interior space 24 of the shaft 18 forms part of the first drain passage 80.

The rotary union 30 differs from the rotary union described in relation to Figures 1 and 2 in that it has no third primary seal 110 and no second drain passage 112. The shaft 18 extends through the gearbox case 12 and is rotationally supported relative to the gearbox case 12 by a rolling-element bearing 152. An additional secondary seal 154 engaging the gearbox case 12 and the shaft prevents the mixed fluids in the enclosed space 14 from exiting the of the gearbox case 12 at the shaft 18.

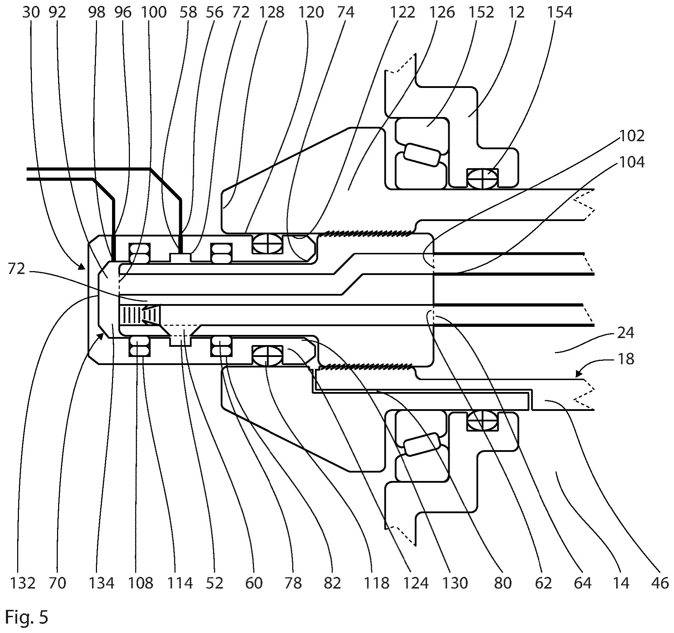

Figure 5 schematically illustrates another embodiment of a rotary union 30. This embodiment shares several features with the embodiment described in relation to Figure 4, and in extension with the embodiment described in relation to Figures 1 and 2. Shared features have been given the same number indexing. The embodiment of Figure 5 differs in that the male part 34 is sealed to the shaft 18 and that only the female part 32 forms the first drain passage 80 that leads to the enclosed space 14 formed by the gearbox case 12.

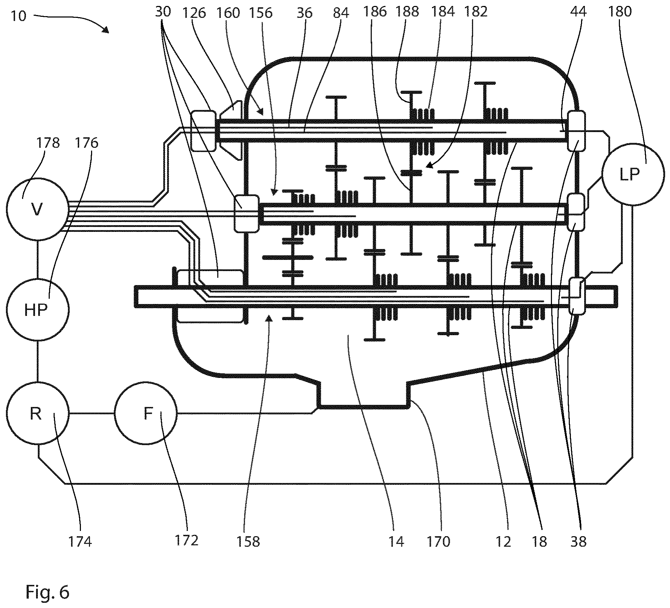

Figure 6 schematically illustrates an embodiment of gearbox 12 having a gearbox case 12 that encapsulates and provides mechanical support for the mechanical components of the gearbox 10. The gearbox case 12 is a fluid-tight container.

The gear box 10 has the first shaft arrangement 156 described in relation to Figure 2, the second shaft arrangement 158 described in relation to Figure 3, and the third shaft arrangement 160 described in relation to Figure 4. The second shaft arrangement 158 extends from the gearbox case 12 and is intended to receive torque from a primary mover of a vehicle. The pinion 126 of the third shaft arrangement 160 is located outside the gearbox case 12 and intended to form part of a differential supplying torque in the drivetrain of the vehicle.

The gearbox case 12 forms a sump 170 that collects primary and secondary fluids that are released in the enclosed space 14 of gearbox case 12. The primary and secondary fluids are mixed into a single fluid within the gearbox case 12. The gearbox further has a filter 172 that filters the collected fluid and a reservoir 174 that stores the filtered fluid. The gearbox 10 further has a first pump 176, a valve arrangement 178, and a second pump 180. The components are arranged and coupled as indicated in Figure 6. The valve arrangement 178 is coupled to the first rotary union 30 of each shaft arrangement 156, 158, and 168, and the second pump 180 is coupled to the second rotary union 38 of each shaft arrangement 156, 158, and 168.

The first pump 176 is a high-pressure pump that pressurizes the fluid and supplies it to the valve arrangement 178, which in turn supplies the pressurized fluid as primary fluids to the primary conduits 36 and 84, of respective shaft arrangement 156, 158, and 160. The second pump 180 is low-pressure pump that supplies the fluid as a secondary fluid to the secondary conduit 44 second rotary union 38 of each shaft arrangement 156, 158, and 160.

The shafts 18 of the shaft arrangements 156, 158, and 160 are connected by gear assemblies 182 as indicated in Figure 6. Each gear assembly 182 has a gear wheel 186 mounted on the shaft of one of the shaft arrangements 156, 158, and 160 that meshes with a gear wheel 188 on one of the other shaft arrangements 156, 158, and 160. One of the gear wheels 186 is fixed to the shaft 18, while the other gear wheel 188 is rotationally supported relative to the shaft 18. Each gear assembly 182 further has a wet clutch 184 connected to the rotationally supported gear wheel 188 and mounted on the same shaft as the rotationally supported gear wheel 188.

Each wet clutch 184 is coupled to a primary conduit 36 or 84 of the shaft arrangement 156, 158, and 160 it is mounted on. The wet clutch 184 can couple and decouple the rotationally supported gear wheel 188 to and from the shaft 18 of the shaft arrangement 156, 158, and 160. Each of the wet clutches 184 are activated and couples the rotationally supported gear wheel 188 to the shaft 18 at an increase of the pressure of the primary fluid.

Additionally, the gear assemblies 182 connecting the same shaft arrangements 156, 158, and 160 have different gear ratios. This way, the valve arrangement 178 can control and regulate the torque transfer between the shaft 18 of the second shaft arrangement 178 receiving torque from the primary mover and the shaft 18 of the third shaft arrangement 180 supplying torque to the drivetrain.

The secondary fluid is released by the shaft arrangement 156, 158, and 160 and cools and lubricates the wet clutches, the gear wheels 186 and 188 of the gear assemblies 182, and bearings supporting the rotationally supported gear wheels 188 and the shafts 18. The primary fluids leak from the rotary unions 30 into the enclosed space 14 of the gearbox case 14. It is also released from the wet clutches 184 when the wet clutches 184 are activated. The primary fluids and the secondary fluid are mixed into a single fluid within the gearbox case 12, as described above.

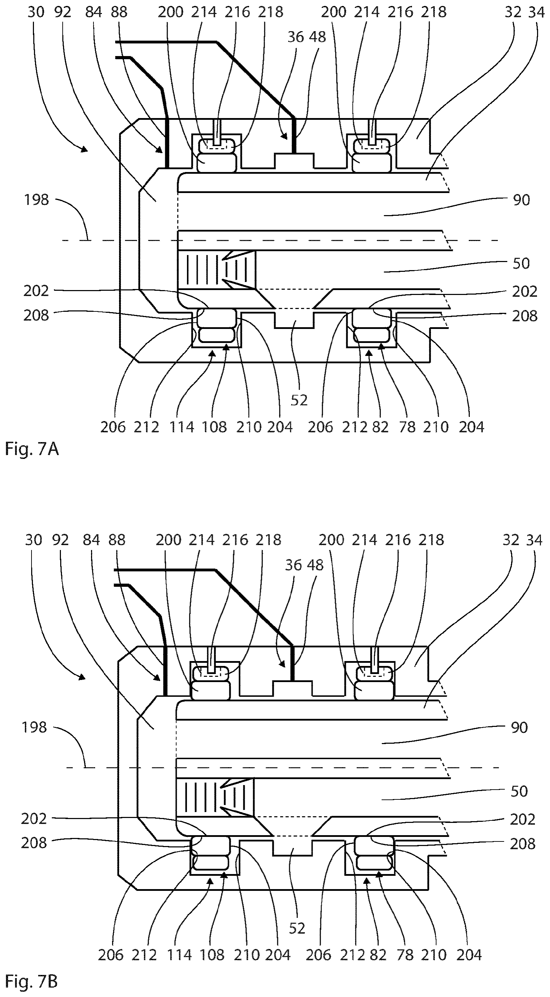

Figure 7A-C is a close-up view of the first rotary union 30 described in relation to Figure 4 showing details of the first primary seal 78 and the second primary seal 108. The primary seals of all the above-described embodiments have the corresponding features and functions described here.

As described above, the first rotary union 30 has a female part 32 and a male part 34 seated in the female part 32. The male part 34 can rotate relative to the female part 32 on an axis of rotation 198, which is concentric with the shaft 18 of the previously described shaft arrangement 16.

The first rotary union 30 has a first primary conduit 36 with a female conduit portion 48 formed by the female part 32 of the rotary union 30 and a male conduit portion 50 formed by the male part 34 of the rotary union 30. The first rotary union 30 forms a first coupling 52 between the female conduit portion 48 and the male conduit portion 50. The first rotary union 30 also has a second primary conduit 84 with a female conduit portion 88 formed by the female part 32 and a male conduit portion 90 formed by the male part 34. The first rotary union 30 forms a second coupling 92 between the female conduit portion 88 and the male conduit portion 90.

The female part 32 forms a first annular seat 82 and a second annular seat 114 that are open to and face the male part 34. A first primary seal 78 is loosely fitted in the first annular seat 82 and a second primary seal 108 is loosely fitted in the second annular seat 114. The first and second primary seals 78 and 108 are dynamic seals that radially seal to the male part 34 of the rotary union 30.

The first primary seal 78 has a width along the axis of rotation 198 that is smaller than the width of the first annular seat 82. The second primary seal 108 and the second annular seat 114 share the same relation in widths. This way, the loosely fitted first and second primary seals 78 and 108 can shift in position away from the first coupling 52 along the axis of rotation 198 at an increase in pressure of the first primary fluid in the first coupling 52. Similarly, the second primary seal 108 can shift in position away from the second coupling 92 at an increase in pressure of the second primary fluid in the second coupling 92.

Each of the primary seals 78 and 108 has a seal ring 200 embracing the male part 34. The seal ring 200 has an inner surface 202 having a cylindrical geometry coaxial with the axis of rotation 198. The seal ring 200 further has a first side surface 204 having a planar geometry that is perpendicular to the axis of rotation and a second side surface 206 having a planar geometry parallel to and facing in the opposite direction of the first side surface 204.

The male part 34 of the rotary union 30 forms a contact surface 208 having a cylindrical geometry centered on the axis of rotation 198, and the inner surface of each seal ring 200 conforms to and is flush with the contact surface 208. This way, the seal ring 200 cooperates with the male part 34 to provide a radial sealing. The seal rings 200 are manufactured from annealed steel, the male part is manufactured from steel, and the contact surface 202 is coated with DLC.

Each of the first and second annular seats 82 and 114 forms a first wall surface 210 and a second wall surface 212. The first and second wall surfaces 210 and 2012 have a planar geometry perpendicular to the axis of rotation 198 and face one another, which means that they conform to the first and second side surfaces 204 and 206 at contact.

Each of the first and second primary seals 78 and 108 has a recess 214 and the female part 32 has protrusions 216 in the form of pins extending inward into each recess 214 that prevent the primary seals 78 and 108 from rotating relative to the female part 32 on the axis of rotation 198. This way the first and second primary seals 78 and 108 are rotationally fixed relative to the female part 32. The recess 214 is elongated and extends along the axis of rotation to allow for the shift in position of the first and second primary seals 78 and 108.

Figure 7A shows the typical positions of the first and second primary seals 78 and 108 within the first and second annular seats 82 and 114 at no pressure in the first or second primary fluids. At an increase in pressure of the first primary fluid in the first primary conduit 36 the pressure also increases in the first coupling 52, which causes the first primary seal 78 to shift in position away from the first coupling 52, and the first side surface 204 of the seal ring 200 engages and cooperates with the first wall surface 210 of the first annular seat 82. Similarly, the increased pressure causes the second primary seal 108 to shift in position away from the first coupling 52, and the second side surface 206 of the seal ring 200 engages and cooperates with the second wall surface 210 of the first annular seat 82. The positions of the first and second primary seals 78 and 108 at increased pressure of the first primary fluid is shown in Figure 7B.

The radial sealing from the inner surface 202 of the seal rings 200 cooperating with the contact surface 208 of the male part 34 is independent of the positions of the first and second primary seals 78 and 108. This, in combination with the shifting position of the first and second primary seals 78 and 108 and the axial sealing of the seal rings 200 from the cooperation between the first and second side surfaces 204 and 206 and the first and second wall surfaces 210 and 212 provides a sealing that is efficient at high rotational rates of the male part 34 relative to the female part 32.

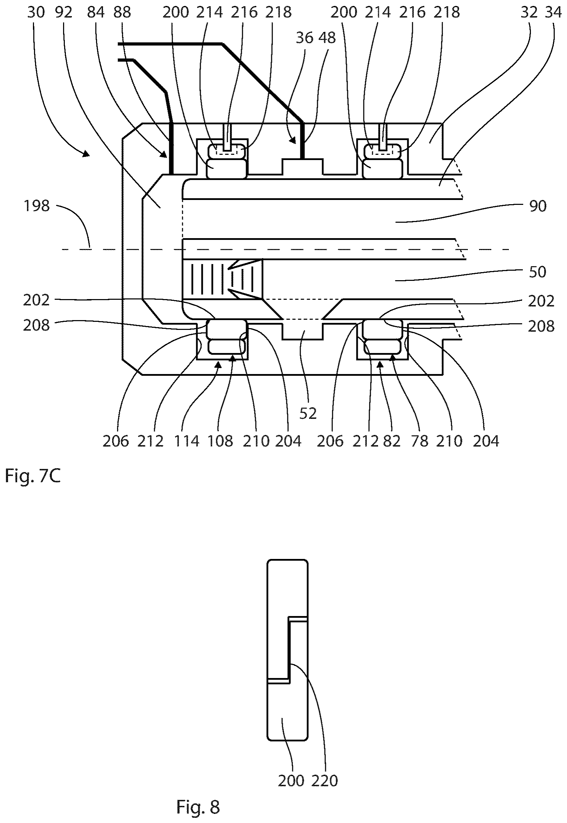

Figure 7C shows the position of the first and second primary seals 78 and 108 at an increase in pressure of the second primary fluid in the second primary conduit 84. The resulting increase in pressure within the second coupling 92 causes the second primary seal 108 to shift in position away from the second coupling 92, and the first side surface 204 of the seal ring 200 engages and cooperates with the first wall surface 210 of the second annular seat 114.

Figure 8 schematically illustrates a seal ring 200. Each seal ring 200 is biased against the contact surface 208 of the male part 34, as is shown in Figures 7A-C. The seal ring 200 has a cut 220 that allow for radially inward deformation of the seal ring 200. Each of the first and second primary seals 78 and 108 has a clamping spring 218 biasing the seal ring 200 against the contact surface 208 of the male part 34.

### ITEM LIST

10 gearbox
12 gearbox case
14 enclosed space of gearbox case
16 shaft arrangement
18 shaft
20 first end of shaft
22 second end of shaft
24 interior space of shaft
26 shaft opening
28 first conduit aperture
30 first rotary union
32 female part of rotary union
34 male part of rotary union
36 first primary conduit
38 second rotary union
40 stationary part of second rotary union
42 rotary part of second rotary union
44 secondary conduit
46 shaft outlet
48 female conduit portion of first primary conduit
50 male conduit portion of first primary conduit
52 first coupling
54 shaft conduit portion of first primary conduit
56 inlet of female conduit portion
58 outlet of female conduit portion
60 inlet of male conduit portion
62 outlet of male conduit portion
64 inlet of shaft conduit portion
66 outlet of shaft conduit portion
68 seat
70 seating space
72 cylindrical portion
74 first annular groove
76 first seat opening
78 first primary seal
80 first drain passage
82 first annular seat
84 second primary conduit
86 second conduit aperture
88 female conduit portion of second primary conduit
90 male conduit portion of second primary conduit
92 second coupling
94 shaft conduit portion of second primary conduit
96 inlet of female conduit portion
98 outlet of female conduit portion
100 inlet of male conduit portion
102 outlet of male conduit portion
104 inlet of shaft conduit portion
106 outlet of shaft conduit portion
108 second primary seal
110 third primary seal
112 second drain passage
114 second annular seat
116 third annular seat
118 secondary seal
120 inside surface of shaft
122 outside surface of female part
124 fourth annular seat
126 pinion
128 distal end of pinion
130 forward end of seat
132 rear end of seat
134 gap
136 second seat opening
138 additional opening
140 second annular groove
152 bearing
154 additional secondary seal
156 first shaft arrangement
158 second shaft arrangement
160 third shaft arrangement
162 wet clutch
164 meshing gear wheels
166 primary fluid source
168 secondary fluid source
170 sump
172 filter
174 reservoir
176 first pump
178 valve arrangement
180 second pump
182 gear assembly
184 wet clutches
186 fixed gear wheels
188 rotationally supported gear wheel
190 third primary conduit
192 third coupling
194 primary seal
196 drain passage
198 axis of rotation
200 seal ring
202 inner surface of seal ring
204 first side surface of seal ring
206 second side surface of seal ring
208 contact surface of male part
210 first wall surface of annular seat
212 second wall surface of annular seat
214 recess
216 protrusion
218 clamping spring
220 cut

## Claims

1. A rotary union (30), wherein the rotary union (30) comprises:
a female part (32),
a male part (34) seated in the female part (32) and rotatable relative to the female part (32) on an axis of rotation (198), and
a first primary conduit (36) configured to convey a first primary fluid and comprising: a female conduit portion (48) formed by the female part (32) of the rotary union (30), and a male conduit portion (50) formed by the male part (34) of the rotary union (30), wherein
the rotary union (30) forms a first coupling (52) between the female conduit portion (48) and the male conduit portion (50), the female part (32) forms an annular seat (82) facing the male part (34), and the rotary union (30) further comprises:
a primary seal (78) positioned in the annular seat (82),
**characterized in that** the first primary seal (78) is a dynamic radial seal.

2. The rotary union (30) according to claim 1, wherein the primary seal (78) is a dynamic seal configured to radially seal to the male part (34) and to shift in position away from the first coupling (52) along the axis of rotation (198) and axially seal to the female part (32) at an increase in pressure of the first primary fluid in the first coupling (52).

3. The rotary union (30) according to any one of claims 1 or 2, wherein the rotary union (30) further comprises:
a second primary conduit (84) configured to convey a second primary fluid and comprising: a female conduit portion (88) formed by the female part (32) of the rotary union (30), and a male conduit portion (90) formed by the male part (34) of the rotary union (30), wherein
the rotary union (30) forms a second coupling (92) between the female conduit portion (88) and the male conduit portion (90) of the second primary conduit (84), and the annular seat (82) and the primary seal (78) are located between the second coupling (92) and the first coupling (52), and the primary seal (78) is configured to shift in position away from the second coupling (92) along the axis of rotation (198) and axially seal to the female part (32) at an increase in pressure of the second primary fluid in the second coupling (92).

4. The rotary union (30) according to any one of claims 2 or 3, wherein the primary seal (78) comprises a seal ring (200), the seal ring (200) forms an inner surface (202) and a first side surface (204), wherein the inner surface (202) cooperates with the male part (34), and the first side surface (204) cooperates with the female part (32) at the increase in pressure of the first primary fluid in the first coupling (52).

5. The rotary union (30) according to claims 3 and 4, wherein the seal ring (200) further forms a second side surface (206), wherein the second side surface (206) and the first side surface (204) face opposite directions and the second side surface (206) cooperates with the female part (32) at the increase in pressure of the second primary fluid in the second coupling (92).

6. The rotary union (30) according to any of the claims 4 or 5, wherein the seal ring (200) is biased against the male part (34), or the contact surface (208) of the male part (34).

7. The rotary union (30) according to any of the claims 1 to 6, wherein the primary seal (78) is rotationally, or tangentially, fixed to the female part (32).

8. The rotary union (30) according to claim 7, wherein the primary seal (78) comprises a recess (214) and the female part (32) comprises a protrusion (216) extending into the recess (214) and arranged to prevent a rotation of the primary seal (78) on the axis of rotation (198) relative to the female part (32).

9. A shaft arrangement (16) for conveying a first primary fluid to hydraulic components inside a gearbox (10) of a vehicle, wherein the shaft arrangement comprises:
a first rotary union (30) according to any of the claims 1 to 8, and
a shaft (18) fixed to the male part (34) of the rotary union (30), wherein the first primary conduit (36) further comprises a shaft conduit portion extending within the shaft (18) from the male part (34) of the rotary union (30).

10. The shaft arrangement (16) according to claim 9, wherein
the shaft (18) comprises a first end (20) and a second end (22), wherein the shaft (18) forms an interior space (24), a shaft opening to the interior space (24) at the first end (20), and a first conduit aperture (28) open to the interior space (24),
the first rotary union (30) comprises a female part (32) forming a seat (68), and a male part (34) seated in the female part (32) and rotatable relative to the female part (32), wherein the male part (34) is attached to the shaft (18) at the first end (20) of the shaft (18), and the first primary conduit (36) is configured to convey a first primary fluid to the first conduit aperture (28) via the first rotary union (30) and the interior space (24) of the shaft (18).

11. The shaft arrangement (16) according to claim 10, wherein the interior space (24) extends from the first end (20) to the second end (22) of the shaft (18).

12. The shaft arrangement (16) according to any one of claims 10 or 11, wherein the first primary conduit (36) extends within the interior space (24) from the male part (34) of the first rotary union (30) to the first conduit aperture (28).

13. The shaft arrangement (16) according to claim 10, wherein the first primary conduit (36) is sealed from the interior space (24).

14. The shaft arrangement (16) according to claim 11, wherein the shaft arrangement (16) further comprises:
- a second rotary union (38), wherein the second rotary union (38) comprises a stationary part (40), a rotary part (42) fixed, and a secondary conduit (44), the rotary part (42) is attached to the shaft (18) at the second end (22) of the shaft (18), the secondary conduit (44) is configured to convey a secondary fluid to the interior space (24) of the shaft (18) via the second rotary union (38), the shaft (18) forms a shaft outlet (46) configured to release the secondary fluid from the interior space (24).

15. A gearbox (10) for a land vehicle comprising:
a gearbox case (12) forming an enclosed space (14),
a shaft arrangement (16) according to any one of the claims 9 to 14, wherein the female part (32) is fixed to the gearbox case (12).
